# FASCICULE DE BREVET EUROPEEN

(11) **EP 3 871 179 B1**
(45) Date de publication et mention de la délivrance du brevet: **24.06.2026**
(21) Numéro de dépôt: 19817387.4
(22) Date de dépôt: 21.10.2019
(51) Int. Cl.: G06Q 30/0283, G06Q 50/40, G07C 9/00, G06Q 10/10, G07F 9/02

(54) **SYSTÈME ET PROCÉDÉ DE SURVEILLANCE DE L'OCCUPATION D'UN COMPARTIMENT PRIVATISABLE, PAR EXEMPLE DE SANITAIRES**
SYSTEM UND VERFAHREN ZUR ÜBERWACHUNG DER BELEGUNG EINES PRIVATISIERBAREN RAUMS, ZUM BEISPIEL VON SANITÄREN EINRICHTUNGEN
SYSTEM AND METHOD FOR MONITORING THE OCCUPANCY OF A PRIVATISABLE COMPARTMENT, FOR EXAMPLE OF SANITARY FACILITIES

(30) Priorité: 26.10.2018 FR 1859947
(43) Date de publication de la demande: 01.09.2021
(73) Titulaire: SNCF Voyageurs, 93200 Saint-Denis (FR)
(72) Inventeur: GOERES, David, 72000 Le Mans (FR); BERTRAND, David, 72000 Le Mans (FR)
(74) Mandataire: Fache, Sébastien
(86) Numéro de dépôt international: PCT/FR2019/052495
(87) Numéro de publication internationale: WO 2020/084237

(56) Documents cités:
- WO-A2-2015/161106
- US-A1- 2012 154 169

## Description

### Domaine de l'invention

L'invention s'inscrit dans le domaine des compartiments privatisables installés dans des lieux recevant du public.

L'invention porte plus particulièrement sur la surveillance de l'occupation desdits compartiments privatifs.

### Art antérieur et inconvénients de l'art antérieur

Les compartiments privatisables situés dans les lieux publics, notamment les sanitaires ou autres compartiments du type cabines d'essayage ou vestiaires, comprennent habituellement un dispositif de fermeture dit d'occupation, manipulable de l'intérieur pour contrôler l'accès à ce compartiment. C'est le cas notamment des cabines sanitaires installées à bord des engins ferroviaires dédiés au transport de voyageurs.

Des dispositifs de fermeture connus sont installés sur les sanitaires à bord de tels engins ferroviaires. Ces dispositifs comprennent essentiellement un loqueteau agencé sur la porte, accessible par le public depuis l'intérieur de la cabine sanitaire et prévu pour coopérer avec un fourreau ménagé sur le bâti de la cabine. Ainsi, pour permettre la fermeture de la cabine et en privatiser momentanément l'accès, l'utilisateur actionne manuellement depuis l'intérieur de la cabine le loqueteau qui s'emmanche alors dans le fourreau. Une fois la cabine fermée, les autres voyageurs sont alors informés par un pictogramme visuel et/ou tactile de l'occupation du compartiment sanitaire. La porte d'accès est ainsi verrouillée, aussi, le dispositif de fermeture est également appelé dispositif de verrouillage. Un dispositif connue de l'art antérieur est décrit dans le document US 2012/154169 A1.

Cependant, les loqueteaux peuvent présenter des avaries et verrouiller accidentellement l'accès alors que personne ne se trouve à l'intérieur du compartiment privatisable.

Un autre inconvénient relève de la sécurité, car ces compartiments privatisables ne disposent d'aucuns moyens permettant d'identifier un voyageur enfermé dans le compartiment sanitaire et/ou victime d'un malaise.

### Objectifs de l'invention

L'invention vise ainsi à s'assurer qu'un compartiment privatisable situé dans un lieu public n'est pas utilisé de manière inhabituelle. L'invention vise également à s'assurer de l'absence de dysfonctionnement du dispositif de verrouillage.

### Exposé de l'invention

À cet effet, l'invention vise un système de surveillance de l'occupation d'un compartiment privatisable du type sanitaire dont un accès du type porte est contrôlé par un dispositif de verrouillage, le système de surveillance comprenant un dispositif de détection configuré pour surveiller la présence d'un individu à l'intérieur du compartiment privatisable, des moyens de détection de l'état ouvert ou verrouillé du dispositif de verrouillage de l'accès audit compartiment privatisable, et des moyens de traitement reliés au dispositif de détection et aux moyens de détection de l'état du dispositif de verrouillage, lesquels moyens de traitement sont configurés pour établir une corrélation entre l'état du dispositif de verrouillage et l'état d'occupation du compartiment privatisable et générer au moins une donnée représentative du niveau de corrélation.

Le système de l'invention peut également comporter les caractéristiques optionnelles suivantes considérées isolément ou selon toutes les combinaisons techniques possibles :
- Le système de surveillance comprend au moins un second dispositif de détection relié aux moyens de traitement des données et configuré pour détecter au moins ponctuellement la présence d'un individu à l'intérieur du compartiment privatisé.
- Les dispositifs de détection de présence comprennent au moins un détecteur de mouvement et/ou au moins un capteur de détection infrarouge.
- Le second dispositif de détection est relié à un moyen d'actionnement d'une arrivée d'eau ou d'un dispositif du type sèche-mains et est configuré pour détecter l'actionnement de ladite arrivée d'eau ou dudit dispositif de type sèche-mains.
- Les moyens de traitement sont configurés pour générer une alerte lorsque le niveau de corrélation entre l'état du dispositif de verrouillage et l'état d'occupation du compartiment privatisable atteint un niveau d'alerte prédéterminé, ledit niveau d'alerte prédéterminé étant enregistré dans un espace mémoire des moyens de traitement.

L'invention vise également un procédé de surveillance de l'occupation d'un compartiment privatisable tel que défini dans les revendications.

Le procédé de l'invention peut également comporter les caractéristiques optionnelles suivantes considérées isolément ou selon toutes les combinaisons techniques possibles :
- Le procédé est tel que la donnée de corrélation renvoie :
   - une première information si le dispositif de détection de présence indique que le compartiment privatisable est occupé depuis une durée supérieure au temps t₀ et les moyens de détection détectent un état ouvert ou verrouillé du dispositif de verrouillage, ou si le dispositif de détection de présence indique que le compartiment privatisable est vide et les moyens de détection détectent un état verrouillé du dispositif de verrouillage, ou
   - une seconde information si le dispositif de détection de présence indique que le compartiment privatisable est vide et les moyens de détection détectent un état ouvert du dispositif de verrouillage, ou si le dispositif de détection de présence indique que le compartiment privatisable est occupé depuis une durée inférieure à un temps t₀ enregistré dans l'espace mémoire et les moyens de détection détectent un état verrouillé du dispositif de verrouillage.
- Le procédé comprend une étape de génération par les moyens de traitement d'une alerte de dysfonctionnement du dispositif de verrouillage et/ou d'occupation inhabituelle si la donnée de corrélation correspond à la première information.
- L'indicateur d'occupation déterminé à la première étape est comparé à un second indicateur d'occupation déterminé à l'aide d'un second dispositif de détection, le système de surveillance comprenant un tel second dispositif de détection relié aux moyens de traitement des données et configuré pour détecter au moins ponctuellement la présence d'un individu à l'intérieur du compartiment privatisé.
- Les moyens de traitement génèrent une alerte :
   - de dysfonctionnement du dispositif de détection si les deux indicateurs d'occupation sont différents, ou
   - de dysfonctionnement du dispositif de verrouillage si les deux indicateurs d'occupation indiquent que le compartiment est vide et que le dispositif de verrouillage est dans un état verrouillé, ou
   - d'occupation inhabituelle du compartiment privatisable si les deux indicateurs d'occupation indiquent que ledit compartiment est occupé depuis un temps supérieur à t₀.

L'invention vise également un matériel ferroviaire comprenant au moins un compartiment privatisable du type sanitaire et un système de surveillance de l'occupation dudit compartiment privatisable tel que décrit précédemment.

### Présentation des figures

D'autres caractéristiques et avantages de l'invention ressortiront clairement de la description qui en est donnée ci-dessous, à titre indicatif et nullement limitatif, en référence aux figures annexées parmi lesquelles :
- La figure 1 est une vue de face depuis l'intérieur du dispositif de verrouillage alors que le compartiment privatisable est libre ;
- La figure 2 est une vue de face depuis l'intérieur du dispositif de verrouillage de la figure 1 alors que le compartiment privatisable est occupé ;
- La figure 3 est un schéma synoptique illustrant les étapes du procédé de surveillance de l'invention.

### Description détaillée de l'invention

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement un mode de réalisation de l'objet de l'invention mais qu'il peut exister d'autres modes de réalisation qui répondent à la définition de l'invention.

Le système de l'invention trouve notamment application dans le domaine de la gestion des compartiments privatisables du type cabines sanitaires installées à bords des engins ferroviaires transportant des voyageurs, en vue de surveiller toute activité inhabituelle liée à l'utilisation de la cabine. Plus précisément, l'invention vise non seulement à s'assurer que la cabine sanitaire n'est pas utilisée de manière inhabituelle, mais également à s'assurer de l'absence de dysfonctionnement du dispositif de verrouillage de ladite cabine.

Dans les engins ferroviaires de transport de voyageurs, notamment les trains grandes lignes, plusieurs cabines sanitaires à destination des voyageurs et du personnel navigant sont installées. Ces cabines sanitaires sont munies d'un accès 2 du type porte battante ou coulissante, et comprennent notamment des toilettes munies d'une chasse d'eau, un lave-mains muni d'une arrivée d'eau déclenchable grâce à un capteur de détection approprié, un distributeur de savon pouvant être électrique et un sèche-mains automatique à air ventilé.

Dans la suite de la description, le terme « cabine » sera utilisé pour définir la cabine sanitaire formant le compartiment privatisable. En outre, on utilisera le terme « porte » pour définir l'accès 2 à la cabine. La porte 2, qui forme l'élément mobile de la cabine, est en outre munie d'une poignée 9 configurée pour actionner un pêne 10 monté sur ressort 11 et prévu pour s'insérer dans une gâche (non représentée) ménagée dans le bâti 1 de la cabine.

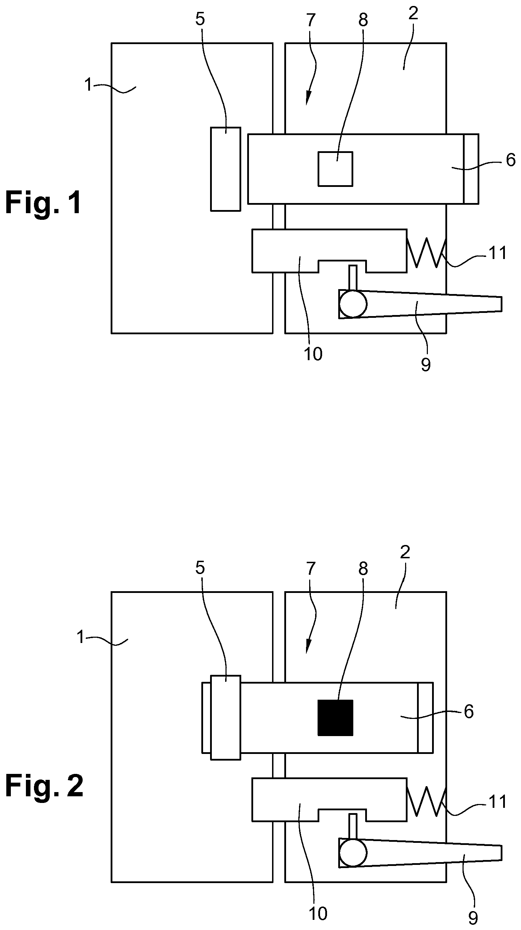

En référence aux figures 1 et 2, et afin de garantir l'intimité du voyageur occupant la cabine, cette dernière est munie d'un loqueteau 6 agencé sur la porte 2 et actionnable manuellement entre une position verrouillée (figure 2) dans laquelle le loqueteau est emmanché dans un fourreau 5 monté sur le bâti 1 de la cabine, et une position ouverte (figure 1) dans laquelle le loqueteau 6 est dégagé du fourreau 5. Le loqueteau 6 et le fourreau 5 forment ainsi un dispositif de verrouillage d'occupation 7 de la cabine. Bien entendu, le loqueteau 6 peut être agencé sur le bâti 1 et le fourreau 5 sur la porte 2, l'important étant que les deux parties 5, 6 du dispositif de verrouillage 7 soient agencées l'une sur le bâti 1 de la cabine et l'autre sur la porte 2 de la cabine.

Ainsi, lorsqu'un individu est dans la cabine, il peut actionner le loqueteau 6 vers sa position verrouillée pour privatiser la cabine.

De manière avantageuse, le dispositif de verrouillage 7 comprend un organe d'information 8 visuel et/ou tactile qui est agencé sur le loqueteau 6 à l'intérieur de la cabine et est configuré pour fournir à l'individu occupant la cabine une information sur l'état ouvert ou verrouillé du loqueteau 6. Cette information est au moins visuelle, et est préférentiellement également tactile pour permettre d'informer un individu non ou mal voyant.

Comme indiqué ci-dessus dans la description, il peut être nécessaire de s'assurer que le dispositif de verrouillage 7 fonctionne correctement, c'est-à-dire que le loqueteau 6 ne s'est pas emmanché accidentellement dans le fourreau 5 alors que personne n'occupe la cabine. En outre, il peut être nécessaire de détecter toute occupation inhabituelle de la cabine. Une occupation inhabituelle peut en effet signifier le malaise ou l'enfermement d'un voyageur dans la cabine, il est donc important d'identifier une telle situation pour une prise en charge rapide et adapté du voyageur coincé ou en détresse. Un système de surveillance permet de vérifier en continu l'état du dispositif de verrouillage 7 et l'état d'occupation de la cabine.

Selon l'invention, le système de surveillance comprend au moins un dispositif de détection de présence, par exemple un détecteur de mouvement à radar ou à capteur photoélectrique, ou encore un capteur optique du type détecteur infrarouge, installé à l'intérieur de la cabine. Le système de surveillance comprend également des moyens de détection de l'état ouvert ou verrouillé du dispositif de verrouillage 7. Ces moyens de détection sont par exemple un capteur du type fin de course configuré pour détecter la position verrouillé ou ouverte du loqueteau 6. Le système de surveillance comprend en outre des moyens de traitement des données issues du dispositif de détection et des moyens de détection de l'état du dispositif de verrouillage 7.

Dans la suite de la description, le dispositif de détection sera nommé « premier capteur » et les moyens de détection de l'état du dispositif de verrouillage 7 seront nommés « capteur loqueteau ».

De la sorte, et comme on le verra en détail ci-dessous, les moyens de traitement sont configurés pour établir une corrélation entre l'état du dispositif de verrouillage 7 et l'état d'occupation du compartiment privatisable, afin de générer une donnée représentative du niveau de corrélation établie. Les moyens de traitement sont en outre configurés pour générer une alerte à destination du personnel naviguant lorsque le niveau de corrélation déterminé atteint un niveau d'alerte prédéterminé et démontre ainsi une situation inhabituelle. Cela sera précisé ci-dessous en liaison avec la description d'un procédé de surveillance mis en œuvre par le système de surveillance de l'invention.

Afin de renforcer la fonction de surveillance de personne à l'intérieur de la cabine, le système de surveillance comprend préférentiellement au moins un second dispositif de détection de présence reliés aux moyens de traitement des données, et qui sera nommé « second capteur » dans la suite de la description. Ce second capteur permet ainsi de prévenir le dysfonctionnement éventuel du premier capteur, en particulier si les données provenant des capteurs respectifs ne sont pas cohérentes entre elles.

Dans une première alternative, ce second capteur est du même type que le premier capteur, c'est-à-dire un détecteur de mouvement ou un capteur optique du type détecteur infrarouge. Dans une autre alternative préférée, ce second capteur est un capteur mécanique du type fin de course et est relié à un moyen d'actionnement d'une arrivée d'eau, par exemple la commande d'évacuation des toilettes. Dans une autre alternative préférée, ce second capteur est le capteur de détection relié à l'arrivée d'eau du lave-main ou le capteur de détection assurant le déclenchement du sèche-mains.

Le système de surveillance comprend également un dispositif électrique d'affichage d'informations visuelles et tactile agencé sur le bâti 1 de la cabine. Ce dispositif comprend un moteur pas à pas à au moins deux positions relié à des moyens de commande, et permet d'afficher à l'extérieur de la cabine une information déterminée en fonction de la position du moteur pas à pas.

Lorsque le loqueteau 6 est dans sa position ouverte, les moyens de commande pilotent le moteur pas à pas dans une première position pour laquelle une information visuelle et/ou tactile indiquant que la cabine est libre est affichée. Lorsque le loqueteau 6 est dans sa position verrouillée, le loqueteau 6 actionne un capteur de type fin de course relié électriquement aux moyens de traitement des données du système de surveillance. Les moyens de commande pilotent alors le moteur pas à pas dans une deuxième position pour laquelle une information visuelle et/ou tactile indiquant que la cabine est occupée momentanément est affichée.

De manière optionnelle, le moteur pas à pas comprend une troisième position qui est occupée lorsque la cabine est mise hors service, par exemple à cause d'une panne. Ainsi, lorsque les moyens de traitement détectent la mise hors service de la cabine, par exemple par actionnement par une personne habilitée d'une serrure agencée sur la porte et le bâti de la cabine, les moyens de commande pilotent le moteur pas à pas dans une troisième position pour laquelle une information visuelle et/ou tactile indiquant que la cabine est hors service est affichée.

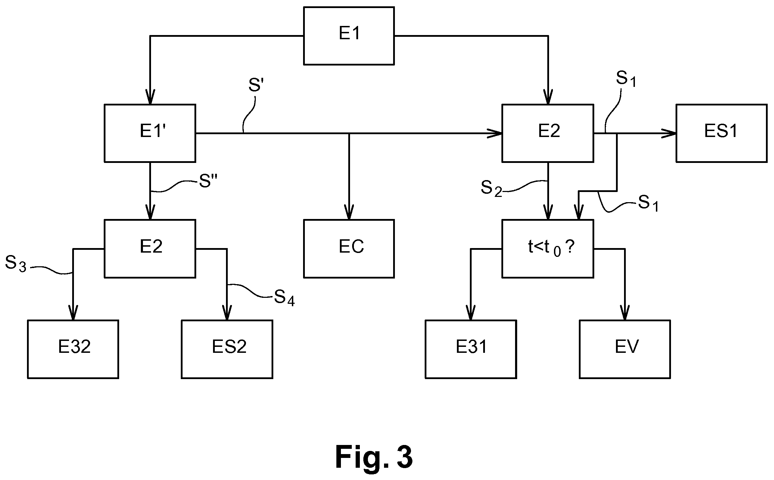

En référence à la figure 3, un procédé de surveillance mis en œuvre par le système de surveillance de l'invention, et permettant de détecter toute occupation inhabituelle de la cabine ou tout dysfonctionnement du loqueteau 6 ou du premier capteur va maintenant être décrit.

Au cours de la première étape E1 du procédé, les moyens de traitements analysent en continu les données issues du premier capteur. Cette première étape est suivie d'une deuxième étape E2 d'analyse par les moyens de traitement des données issues du capteur loqueteau.

Les données issues du premier capteur et du capteur loqueteau sont alors comparées par les moyens des traitement pour générer une donnée de corrélation dépendante de la situation rencontrée et dont la fonction sera explicitée ci-après. Les moyens de traitement sont en effet susceptibles de rencontrer différentes situations qui vont être explicitées ci-après, et de ces situations dépendra la teneur de l'information renvoyée par la donnée de corrélation générée.

Dans une première situation S1, le premier capteur indique la présence d'une personne dans la cabine, et le capteur loqueteau indique un état ouvert du loqueteau 6. Même s'il est probable que la personne n'a tout simplement pas verrouillé la porte 2 de la cabine, il est possible que le loqueteau 6 soit défectueux. Dans cette première situation, les moyens de traitements peuvent générer une alerte ES1 à destination d'un terminal du contrôleur de l'engin ferroviaire ou d'un terminal du service de maintenance, indiquant un éventuel dysfonctionnement du loqueteau 6.

Dans une deuxième situation S2, le premier capteur indique la présence d'une personne dans la cabine, et le capteur loqueteau indique un état verrouillé du loqueteau 6. Le premier capteur et les moyens de traitement sont reliés à un compteur qui est configuré pour chronométrer la durée d'occupation de la cabine. Si cette durée est inférieure à une durée t₀ enregistrée dans un espace mémoire des moyens de traitement, ces derniers considèrent la situation normale E31. Si cette durée devient supérieure à la durée t₀, la donnée de corrélation renvoie une première information qui va entrainer la génération d'une alerte EV d'occupation anormale de la cabine par les moyens de traitement à destination du terminal contrôleur ou du terminal maintenance. Cette alerte peut traduire notamment un enfermement ou un malaise voyageur.

Dans le cadre de la première situation explicitée ci-dessus, les moyens de traitement généreront également une alerte d'occupation anormale de la cabine à destination du terminal contrôleur ou du terminal maintenance.

Dans d'autres situations, le premier capteur indique que la cabine est inoccupée. De manière optionnelle, les moyens de traitement peuvent vérifier E1' à l'aide du second capteur que la cabine est bien inoccupée.

Si les informations des premier et second capteurs ne sont pas concordantes S', les moyens de traitements peuvent générer une alerte EC à destination du terminal contrôleur ou du terminal maintenance, indiquant un dysfonctionnement du premier capteur. Le procédé reprend alors comme décrit ci-dessus en considérant que la cabine est bien occupée, c'est-à-dire que les moyens de traitements considérent qu'ils rencontrent la première ou la deuxième situation S1, S2. Le second capteur est également relié au compteur pour permettre aux moyens de traitement de déterminer la durée d'occupation de la cabine à partir des données issues du second capteur.

Si les informations des premier et second capteurs concordent S", les moyens de traitement en déduisent l'inoccupation de la cabine. Les moyens de traitement mettent alors en œuvre l'étape E2 d'analyse des données issues du capteur loqueteau.

Dans une troisième situation S3, la cabine est inoccupée et le capteur loqueteau indique un état ouvert du loqueteau 6. La donnée de corrélation générée suite à la comparaison des données du premier capteur et du capteur loqueteau renvoie une seconde information correspondant à une situation normale E32. Aucune alerte n'est générée.

Dans une quatrième et dernière situation, la cabine est inoccupée et le capteur loqueteau indique un état verrouillé du loqueteau 6. La donnée de corrélation générée suite à la comparaison des données du premier capteur et du capteur loqueteau renvoie la première information correspondant à une situation anormale, et les moyens de traitement vont générer une alerte ES2 vers le terminal contrôleur ou le terminal maintenance pour indiquer un dysfonctionnement du loqueteau 6, et en particulier que le loqueteau 6 est dans sa position verrouillée alors que la cabine est inoccupée.

L'invention permet donc de détecter plusieurs situations en fonction des états corrélés d'occupation de la cabine et de verrouillage du loqueteau 6, et de générer des alertes d'occupation inhabituelles de la cabine, de dysfonctionnement du loqueteau 6 ou encore de dysfonctionnement du premier capteur.

## Revendications

1. Système de surveillance de l'occupation d'un compartiment privatisable du type sanitaire dont un accès du type porte (2) est contrôlé par un dispositif de verrouillage (7), le système de surveillance comprenant un dispositif de détection configuré pour surveiller la présence d'un individu à l'intérieur du compartiment privatisable, des moyens de détection de l'état ouvert ou verrouillé du dispositif de verrouillage (7) de l'accès audit compartiment privatisable, et des moyens de traitement reliés au dispositif de détection et aux moyens de détection de l'état du dispositif de verrouillage (7), lesquels moyens de traitement sont configurés pour :
• Lire, par les moyens de traitement, les données issues du dispositif de détection pour déterminer un indicateur d'occupation du compartiment privatisable ;
• Déterminer, par les moyens de détection, l'état ouvert ou verrouillé du dispositif de verrouillage (7) de l'accès au compartiment privatisable,
• Comparer l'indicateur d'occupation du compartiment et l'état du dispositif de verrouillage (7) de l'accès au compartiment privatisable pour générer une donnée de corrélation représentative du niveau de corrélation entre ledit indicateur d'occupation du compartiment et l'état dudit dispositif de verrouillage (7) de l'accès au compartiment privatisable, et
• générer une alerte lorsque le niveau de corrélation entre l'état du dispositif de verrouillage (7) et l'état d'occupation du compartiment privatisable atteint un niveau d'alerte prédéterminé, ledit niveau d'alerte prédéterminé étant enregistré dans un espace mémoire des moyens de traitement.

2. Système de surveillance selon la revendication précédente, **caractérisé en ce qu'**il comprend au moins un second dispositif de détection relié aux moyens de traitement des données et configuré pour détecter au moins ponctuellement la présence d'un individu à l'intérieur du compartiment privatisé.

3. Système de surveillance selon la revendication 2, **caractérisé en ce que** les dispositifs de détection de présence comprennent au moins un détecteur de mouvement et/ou au moins un capteur de détection infrarouge.

4. Système de surveillance selon la revendication précédente, **caractérisé en ce que** le second dispositif de détection est relié à un moyen d'actionnement d'une arrivée d'eau ou d'un dispositif du type sèche-mains et est configuré pour détecter l'actionnement de ladite arrivée d'eau ou dudit dispositif de type sèche-mains.

5. Procédé de surveillance de l'occupation d'un compartiment privatisable relié à un système de surveillance de l'occupation dudit compartiment privatisable dont un accès du type porte (2) est contrôlé par un dispositif de verrouillage (7) dudit accès, le système de surveillance comprenant un dispositif de détection configuré pour surveiller en continu la présence d'un individu à l'intérieur du compartiment privatisable, des moyens de détection de l'état ouvert ou verrouillé du dispositif de verrouillage (7) de l'accès audit compartiment privatisable, et des moyens de traitement reliés au dispositif de détection et aux moyens de détection de l'état du dispositif de verrouillage (7), ledit procédé comprenant au moins les étapes successives de :
• Lecture (E1), par les moyens de traitement, des données issues du dispositif de détection pour déterminer un indicateur d'occupation du compartiment privatisable,
• Détermination (E2) par les moyens de détection de l'état ouvert ou verrouillé du dispositif de verrouillage (7) de l'accès au compartiment privatisable,
• Comparaison entre l'indicateur d'occupation du compartiment et l'état du dispositif de verrouillage (7) de l'accès au compartiment privatisable pour générer une donnée de corrélation, et
• Génération d'une alerte lorsque le niveau de corrélation entre l'état du dispositif de verrouillage (7) et l'état d'occupation du compartiment privatisable atteint un niveau d'alerte prédéterminé.

6. Procédé selon la revendication précédente, **caractérisé en ce que** la donnée de corrélation renvoie :
• une première information si le dispositif de détection de présence indique que le compartiment privatisable est occupé depuis une durée supérieure au temps t₀ et les moyens de détection détectent un état ouvert ou verrouillé du dispositif de verrouillage (7), ou si le dispositif de détection de présence indique que le compartiment privatisable est vide et les moyens de détection détectent un état verrouillé du dispositif de verrouillage (7), ou
• une seconde information si le dispositif de détection de présence indique que le compartiment privatisable est vide et les moyens de détection détectent un état ouvert du dispositif de verrouillage (7), **ou** si le dispositif de détection de présence indique que le compartiment privatisable est occupé depuis une durée inférieure à un temps t₀ enregistré dans l'espace mémoire et les moyens de détection détectent un état verrouillé du dispositif de verrouillage (7).
et **en ce que** l'alerte générée est une alerte de dysfonctionnement du dispositif de verrouillage (7) et/ou d'occupation inhabituelle si la donnée de corrélation correspond à la première information.

7. Procédé selon la revendication 5 ou 6, le système de surveillance comprenant un second dispositif de détection relié aux moyens de traitement des données et configuré pour détecter au moins ponctuellement la présence d'un individu à l'intérieur du compartiment privatisé, dans lequel procédé l'indicateur d'occupation déterminé à la première étape est comparé à un second indicateur d'occupation déterminé à l'aide du second dispositif de détection.

8. Procédé selon la revendication précédente, **caractérisé en ce que** les moyens de traitement génèrent une alerte :
• de dysfonctionnement du dispositif de détection si les deux indicateurs d'occupation sont différents, ou
• de dysfonctionnement du dispositif de verrouillage (7) si les deux indicateurs d'occupation indiquent que le compartiment est vide et que le dispositif de verrouillage (7) est dans un état verrouillé, ou
• d'occupation inhabituelle du compartiment privatisable si les deux indicateurs d'occupation indiquent que ledit compartiment est occupé depuis un temps supérieur à t₀.

9. Matériel ferroviaire comprenant au moins un compartiment privatisable du type sanitaire et un système de surveillance de l'occupation dudit compartiment privatisable selon l'une quelconque des revendications 1 à 4.

## Patentansprüche

1. System zur Überwachung der Belegung eines abtrennbaren Raums vom Sanitärtyp, dessen Zugang in Form einer Tür (2) durch eine Verriegelungsvorrichtung (7) gesteuert wird, wobei das Überwachungssystem eine Erfassungsvorrichtung umfasst, die so konfiguriert ist, dass sie die Anwesenheit einer Person im Inneren des abtrennbaren Raums überwacht, Mittel zur Erfassung des geöffneten oder verriegelten Zustands der Verriegelungsvorrichtung (7) des Zugangs zu dem genannten abgeschirmten Raum, und Verarbeitungsmittel, die mit der Erfassungsvorrichtung und den Mitteln zur Erfassung des Zustands der Verriegelungsvorrichtung (7) verbunden sind, wobei die Verarbeitungsmittel dazu ausgelegt sind:
• Lesen der von der Erfassungsvorrichtung stammenden Daten durch die Verarbeitungsmittel, um einen Belegungsindikator für den abtrennbaren Raum zu ermitteln;
• Ermittlung des geöffneten oder verriegelten Zustands der Verriegelungsvorrichtung (7) für den Zugang zum abtrennbaren Bereich durch die Erfassungsmittel,
• den Belegungsindikator des Abteils und den Zustand der Verriegelungsvorrichtung (7) für den Zugang zum abgetrennten Abteil zu vergleichen, um Korrelationsdaten zu erzeugen, die den Korrelationsgrad zwischen dem genannten Belegungsindikator des Abteils und dem Zustand der genannten Verriegelungsvorrichtung (7) für den Zugang zum abgetrennten Abteil wiedergeben, und
• Erzeugen eines Alarms, wenn der Korrelationsgrad zwischen dem Zustand der Verriegelungsvorrichtung (7) und dem Belegungszustand des abtrennbaren Abteils einen vorbestimmten Alarmwert erreicht, wobei der vorbestimmte Alarmwert in einem Speicherbereich der Verarbeitungsmittel gespeichert ist.

2. Überwachungssystem nach dem vorstehenden Anspruch, **dadurch gekennzeichnet, dass** es mindestens eine zweite Erfassungsvorrichtung umfasst, die mit den Datenverarbeitungsmitteln verbunden und so konfiguriert ist, dass sie zumindest punktuell die Anwesenheit einer Person im Inneren des abgeschirmten Bereichs erfasst.

3. Überwachungssystem nach Anspruch 2, **dadurch gekennzeichnet, dass** die Anwesenheitserfassungsvorrichtungen mindestens einen Bewegungsmelder und/oder mindestens einen Infrarot-Erfassungssensor umfassen.

4. Überwachungssystem nach dem vorstehenden Anspruch, **dadurch gekennzeichnet, dass** die zweite Erfassungsvorrichtung mit einer Betätigungseinrichtung für eine Wasserzufuhr oder eine Vorrichtung vom Typ Händetrockner verbunden und so konfiguriert ist, dass sie die Betätigung der genannten Wasserzufuhr oder der genannten Vorrichtung vom Typ Händetrockner erfasst.

5. Verfahren zur Überwachung der Belegung eines abtrennbaren Raums, verbunden mit einem System zur Überwachung der Belegung des abtrennbaren Raums, dessen Zugang in Form einer Tür (2) durch eine Verriegelungsvorrichtung (7) für diesen Zugang gesteuert wird, wobei das Überwachungssystem eine Erfassungsvorrichtung umfasst, die so konfiguriert ist, dass sie kontinuierlich die Anwesenheit einer Person im Inneren des abtrennbaren Raums überwacht, Mittel zur Erfassung des geöffneten oder verriegelten Zustands der Verriegelungsvorrichtung (7) des Zugangs zu dem abgetrennten Raum, und Verarbeitungsmittel, die mit der Erfassungsvorrichtung und den Mitteln zur Erfassung des Zustands der Verriegelungsvorrichtung (7) verbunden sind, wobei das Verfahren mindestens die folgenden aufeinanderfolgenden Schritte umfasst:
• Auslesen (E1) der von der Erfassungsvorrichtung stammenden Daten durch die Verarbeitungsmittel, um einen Belegungsindikator für den abtrennbaren Bereich zu ermitteln,
• Ermittlung (E2) des geöffneten oder verriegelten Zustands der Verriegelungsvorrichtung (7) für den Zugang zum abtrennbaren Bereich durch die Erfassungsmittel,
• Vergleich des Belegungsindikators des Abteils mit dem Zustand der Verriegelungsvorrichtung (7) für den Zugang zum abgetrennten Bereich, um Korrelationsdaten zu erzeugen , und
• Erzeugung eines Alarms, wenn der Korrelationsgrad zwischen dem Zustand der Verriegelungsvorrichtung (7) und dem Belegungszustand des abtrennbaren Abteils einen vorbestimmten Alarmwert erreicht.

6. Verfahren nach dem vorstehenden Anspruch, **dadurch gekennzeichnet, dass** die Korrelationsdaten Folgendes zurückgeben:
• eine erste Information, wenn die Anwesenheitserfassungsvorrichtung anzeigt, dass der abtrennbare Raum seit einer Zeitdauer beschäftigt ist, die größer ist als die Zeit t₀ und die Erfassungsmittel einen offenen oder verriegelten Zustand der Verriegelungsvorrichtung (7) erfassen, oder wenn die Anwesenheitserfassungsvorrichtung anzeigt, dass der abtrennbare Raum leer ist und die Erfassungsmittel einen verriegelten Zustand der Verriegelungsvorrichtung (7) erfassen, oder
• eine zweite Information, wenn die Anwesenheitserfassungsvorrichtung anzeigt, dass der abtrennbare Raum leer ist und die Erfassungsmittel einen geöffneten Zustand der Verriegelungsvorrichtung (7) erfassen, **oder** wenn die Anwesenheitserfassungsvorrichtung anzeigt, dass der abtrennbare Raum seit einer Zeit von weniger als einer Zeit t₀ im Speicherbereich gespeichert ist und die Erfassungsmittel einen verriegelten Zustand der Verriegelungsvorrichtung (7) erfassen.
und dass der generierte Alarm ein Alarm wegen einer Fehlfunktion der Verriegelungsvorrichtung (7) und/oder einer ungewöhnlichen Belegung ist, wenn die Korrelationsdaten der ersten Information entsprechen.

7. Verfahren nach Anspruch 5 oder 6, wobei das Überwachungssystem eine zweite Erfassungsvorrichtung umfasst, die mit den Datenverarbeitungsmitteln verbunden und so konfiguriert ist, dass sie zumindest punktuell die Anwesenheit einer Person im Inneren des abgeschirmten Bereichs erfasst, wobei bei diesem Verfahren der im ersten Schritt ermittelte Belegungsindikator mit einem zweiten Belegungsindikator verglichen wird, der mit Hilfe der zweiten Erfassungsvorrichtung ermittelt wurde.

8. Verfahren nach dem vorstehenden Anspruch, **dadurch gekennzeichnet, dass** die Verarbeitungsmittel einen Alarm auslösen:
• einer Fehlfunktion der Erfassungsvorrichtung, wenn die beiden Belegungsindikatoren unterschiedlich sind, oder
• einer Fehlfunktion der Verriegelungsvorrichtung (7), wenn beide Belegungsanzeigen anzeigen, dass der Raum leer ist und sich die Verriegelungsvorrichtung (7) im verriegelten Zustand befindet, oder
• einer ungewöhnlichen Belegung des abtrennbaren Abteils, wenn beide Belegungsanzeigen anzeigen, dass das Abteil seit einer Zeit von mehr als t₀ belegt ist.

9. Schienenfahrzeug, das mindestens ein privatisierbares Abteil vom Sanitärtyp und ein System zur Überwachung der Belegung des genannten privatisierbaren Abteils gemäß einem der Ansprüche 1 bis 4 umfasst.

## Claims

1. A system for monitoring the occupancy of a private compartment of the sanitary type, in which a door-type access (2) is controlled by a locking device (7), the monitoring system comprising a detection device configured to monitor the presence of an individual inside the private compartment, means for detecting the open or locked state of the locking device (7) of the access to said private compartment, and processing means connected to the detection device and to the means for detecting the state of the locking device (7), which processing means are configured to:
• Read, via the processing means, the data from the detection device to determine an occupancy indicator for the private compartment;
• Determine, via the detection means, the open or locked state of the locking device (7) controlling the access of the private compartment,
• Compare the compartment occupancy indicator and the status of the locking device (7) of the access of the private compartment to generate correlation data representative of the level of correlation between said compartment occupancy indicator and the status of said locking device (7) of the access of the private compartment, and
• generating an alert when the level of correlation between the state of the locking device (7) and the occupancy status of the private compartment reaches a predetermined alert level, said predetermined alert level being stored in a memory space of the processing means.

2. A monitoring system according to the preceding claim, **characterised in that** it comprises at least a second detection device connected to the data processing means and configured to detect, at least intermittently, the presence of an individual inside the private compartment.

3. A surveillance system according to claim 2, **characterised in that** the presence detection devices comprise at least one motion detector and/or at least one infrared detection sensor.

4. A monitoring system according to the preceding claim, **characterised in that** the second detection device is connected to a means for activating a water supply or a hand-drying device and is configured to detect the activation of said water supply or said hand-drying device.

5. A method for monitoring the occupancy of a private compartment connected to a system for monitoring the occupancy of said private compartment, in which a door-type access (2) is controlled by a locking device (7) of said access, the monitoring system comprising a detection device configured to continuously monitor the presence of an individual inside the private compartment, means for detecting the open or locked state of the locking device (7) of the access of said private compartment, and processing means connected to the detection device and to the means for detecting the state of the locking device (7), said method comprising at least the successive steps of:
• Reading (E1), by the processing means, of the data from the detection device to determine an occupancy indicator for the private compartment,
• Determination (E2) by the detection means of the open or locked state of the locking device (7) of the access of the private compartment,
• Comparison of the compartment occupancy indicator with the status of the locking device (7) controlling the access of the private compartment to generate correlation data, and
• Generating an alert when the correlation level between the state of the locking device (7) and the occupancy status of the private compartment reaches a predetermined alert level.

6. A method according to the preceding claim, **characterised in that** the correlation data refers to:
• a first piece of information if the presence detection device indicates that the private compartment has been occupied for a duration greater than the time t₀ and the detection means detect an open or locked state of the locking device (7), or if the presence detection device indicates that the private compartment is empty and the detection means detect a locked state of the locking device (7), or
• a second piece of information if the presence detection device indicates that the private compartment is empty and the detection means detect an open state of the locking device (7), **or** if the presence detection device indicates that the private compartment has been occupied for a duration shorter than a time t₀ stored in the memory space and the detection means detect that the locking device (7) is in a locked state.
and **in that** the alert generated is an alert indicating a malfunction of the locking device (7) and/or unusual occupancy if the correlation data corresponds to the first piece of information.

7. A method according to claim 5 or 6, the monitoring system comprising a second detection device connected to the data processing means and configured to detect, at least punctually, the presence of an individual inside the private compartment, in which method the occupancy indicator determined in the first step is compared with a second occupancy indicator determined using the second detection device.

8. A method according to the preceding claim, **characterized in that** the processing means generate an alert:
• of a malfunction in the detection device if the two occupancy indicators are different, or
• a malfunction of the locking device (7) if both occupancy indicators show that the compartment is empty and the locking device (7) is in a locked state, or
• unusual occupancy of the private compartment if both occupancy indicators indicate that said compartment has been occupied for a time greater than t₀.

9. Railway rolling stock comprising at least one private compartment of the sanitary type and a system for monitoring the occupancy of said private compartment according to any one of claims 1 to 4.
